# EUROPEAN PATENT APPLICATION

(11) **EP 4 603 789 A1**
(43) Date of publication of application: **20.08.2025**
(21) Application number: 23885767.6
(22) Date of filing: 31.10.2023
(51) Int. Cl.: G01B 11/02, C12M 1/34, G01N 21/17, G01N 33/48, G06T 7/00, G06T 7/60, G06V 10/70, G06V 20/69

(54) **TISSUE SLICE THICKNESS ESTIMATION DEVICE, TISSUE SLICE THICKNESS EVALUATION DEVICE, TISSUE SLICE THICKNESS ESTIMATION METHOD, TISSUE SLICE THICKNESS ESTIMATION PROGRAM, AND RECORDING MEDIUM**

(30) Priority: 04.11.2022 JP 2022177372
(71) Applicant: Ohara, Toshiaki, Okayama-shi, Okayama 7008558 (JP); Fujisawa, Masayoshi, Okayama-shi, Okayama 700-8558 (JP); Iwasaki, Yoshiaki, Okayama-shi, Okayama 700-8530 (JP)
(72) Inventor: HIGUCHI Takuhiro, Okayama-shi Okayama 700-0903 (JP); OHARA Toshiaki, Okayama-shi Okayama 7008558 (JP); FUJISAWA Masayoshi, Okayama-shi Okayama 700-8558 (JP)
(74) Representative: Seemann & Partner Patentanwälte mbB
(86) International application number: PCT/JP2023/039284
(87) International publication number: WO 2024/096013

(57) **Abstract**

A tissue section thickness estimation device 1 comprises a difference image generator 10 that generates a difference image between a microscopic image of a tissue section taken under conditions of shallow depth of focus and a microscopic image of the tissue section taken under conditions of deep depth of focus, and an estimation unit 20 that estimates the thickness of the tissue section from the difference image.

## Description

The present disclosure relates to a tissue section thickness estimation device, a tissue section thickness evaluation device, a tissue section thickness estimation method, a tissue section thickness estimation program, and a recording medium.

### BACKGROUND ART

It is known that the thickness of a tissue section is related to the absorbance, i.e., brightness. For example, Non Patent Literature 1 discloses the absorbance and thickness of hematoxylin and eosin stained, hereinafter referred to as "HE stained", tissue sections.

### RELATED-ART LITERATURE

Non Patent Literature 1: "Optical density-based image analysis method for the evaluation of hematoxylin and eosin staining", Elizabeth Chlipala, Christine M. Bendzinski, Kevin Chu, Joshua I. Johnson, Miles Brous, Karen Copeland & Brad Bolon, JOURNAL OF HISTOTECHNOLOGY 2020, VOL. 43, NO. 1, 29.37 https://doi.org/10.1080/01478885.2019.1708611

### SUMMARY OF INVENTION

### TECHNICAL PROBLEM

Tissue sections, such as histopathology sections, are prepared for pathological diagnosis of various diseases occurring in organs. Generally, organs removed during surgery or other procedures are fixed in formalin, embedded in paraffin, sliced thinly and mounted on glass slides. In the pathological diagnosis field, where images are handled, the use of AI is expected to assist diagnosis, etc., but its diffusion has been slower than in other fields such as radiology and endoscopy. This is mainly due to the fact that the process of generating the original slides for the images involves many manual analog processes. Because of this manual work, it is extremely difficult to standardize the analog process. Therefore, depending on the hospital or environment, for example, sufficient reproducibility cannot be obtained and the performance of the developed AI for pathological diagnosis will not be demonstrated.

In the process of preparing tissue sections, the "thin sectioning (microtomy)" is a process with particularly large variability. Usually, medical technologists at each hospital manually slice the paraffin block to 4 µm. However, the variation that occurs during this process cannot be completely eliminated. In addition, each hospital is usually not equipped with a means of measuring the thickness of the thinly sliced paraffin, so the work is done by relying on the sense of each medical technologist. However, differences in the thickness of tissue sections have a significant impact on the images observed under the microscope, which not only affects pathological diagnosis, but is also a major factor hindering the development of AI for pathological diagnosis.

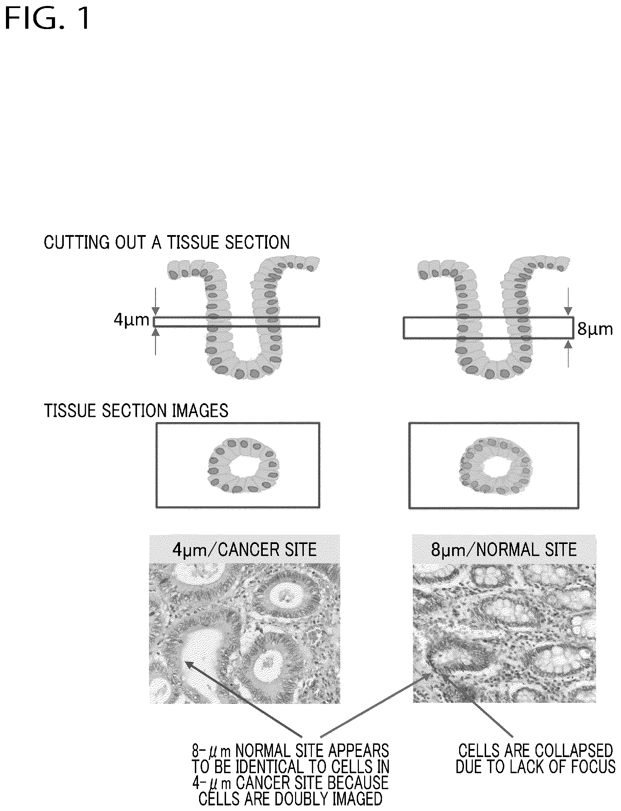

Figure 1 shows a view of tissue sections being cut out (top row, side view of tissue block), a sectioned tissue section (middle row, top view of section) and microscopic images of these tissue sections (bottom row, left: cancerous area when cut out at 4 µm, right: normal area when cut out at 8 µm). The left figure shows when cut at a thickness of 4 µm, and the right figure shows when cut at a thickness of 8 µm. It can be seen that, in the 4 µm-thick section, the cells do not overlap each other and the image is in focus. On the other hand, it can be seen that, in the 8 µm-thick section, they overlap each other, resulting in an out-of-focus image. As shown in the bottom figures, in the micrograph of a normal area sectioned at 8 µm, the cells are doubled up and look like the cells in a cancerous area sectioned at 4 µm. In addition, some of the cells are out of focus and appear merged together. In order to recognize cancer cells using tissue sections, it is necessary to accurately determine the shape, size, and density of the nucleus, as well as the arrangement of the nuclei. However, if the tissue sections are thick, these accurate judgments cannot be made, which may lead to misdiagnosis.

For these reasons, standardization of tissue sections is necessary for the development of AI for pathological diagnosis. In recent years, efforts have been made to fully standardize pathology diagnosis with the goal of fully automating pathology specimen preparation and image acquisition. Since this strategy is based on mechanization, fully automated tissue sectioning and staining devices are required. However, these devices are expensive, costing tens of millions of yen, and it is extremely difficult to introduce them widely in general hospitals. Therefore, even if a mechanized standardized process is completed, it can only be used in a limited number of large-scale facilities. And in general hospitals, where many pathology specimens are generated, it is difficult to produce standardized tissue sections. This means that many hospitals and medical facilities cannot benefit from AI for pathological diagnosis. Therefore, there is a need to develop technology that can standardize tissue sections without the need to install expensive equipment as described above.

The thickness of tissue sections can be measured, for example, by using confocal laser microscopy or white interference microscopy. With such devices, the thickness of a tissue section prepared by a medical technologist can be determined, so that, for example, the extent to which the thickness deviates from the target thickness can be determined. This would improve the skill of the medical technologist and standardize the tissue sections.

However, microscopes such as those described above are for industrial use and are not usually provided by general hospitals. On the other hand, if it is possible to estimate the thickness of a tissue section using an ordinary optical microscope, etc., provided by a general hospital, etc., it is expected to be a fundamental technology for the development of AI for pathological diagnosis.

The present disclosure was made in view of these issues, and its purpose is to provide a technology that can estimate the thickness of a prepared tissue section from an image such as an ordinary optical microscopic image.

### SOLUTION TO PROBLEM

To solve the above problem, a tissue section thickness estimation device according to an embodiment of the present disclosure comprises a difference image generator that generates a difference image between a microscopic image of a tissue section taken under conditions of shallow depth of focus and a microscopic image of the tissue section taken under conditions of deep depth of focus, and an estimation unit that estimates the thickness of the tissue section from the difference image.

In one embodiment, the change in depth of focus may be generated by adjusting the condenser of an optical microscope.

In one embodiment, tissue section thickness estimation device may comprise a model generator that performs machine learning using the microscopic images of the tissue sections taken under shallow depth of focus conditions, the microscopic images of the tissue sections taken under deep depth of focus conditions and the actual thickness measurements of the tissue sections as teacher data, and uses the machine learning to generate an estimation model that estimates and outputs the thickness of the tissue section when an image of the tissue section is input. The estimation unit estimates the thickness of the tissue section using the estimation model generated by the model generator.

In one embodiment, the tissue sections may be HE stained tissue, deparaffinized and unstained tissue, or undeparaffinized and unstained tissue.

Another embodiment of this disclosure is a tissue section thickness evaluation device. The device comprises a tissue section thickness estimation device of any of the above and a tissue section thickness evaluation unit. The tissue section thickness evaluation unit evaluates the usability of the tissue section for pathological diagnosis based on the thickness of the tissue section estimated by the tissue section thickness estimation device and the color of the tissue section.

Yet another embodiment of this disclosure is a tissue section thickness estimation method. The method comprises a difference image generation step that generates a difference image between a microscopic image of a tissue section taken under shallow depth of focus conditions and a microscopic image of a tissue section taken under deep depth of focus conditions and an estimation step that estimates the thickness of the tissue section from the difference image.

Yet another embodiment of this disclosure is a tissue section thickness estimation program. The program causes a computer to perform a difference image generation step that generates a difference image between a microscopic image of a tissue section taken under shallow depth of focus conditions and a microscopic image of a tissue section taken under deep depth of focus conditions an estimation step that estimates the thickness of the tissue section from the difference image.

Yet another embodiment of this disclosure is a recording media. The recording media records a tissue section thickness estimation program that causes a computer to perform a difference image generation step that generates a difference image between a microscopic image of a tissue section taken under shallow depth of focus conditions and a microscopic image of a tissue section taken under deep depth of focus conditions and an estimation step that estimates the thickness of the tissue section from the difference image.

Yet another embodiment of this disclosure is a tissue section thickness estimation device. The device comprises an image data generator that generates microscopic image data for a microscopic image of a focused tissue section, an estimation unit that estimates the thickness of the tissue section from the microscopic image and a model generator that performs machine learning using the microscopic image data of the focused tissue section and the measured thickness of the tissue section as teacher data to generate an estimation model that estimates the thickness of the tissue section when an image of the tissue section is input. The estimation unit estimates the thickness of the tissue sections using the estimation model generated by the model generator.

In one embodiment, the microscopic image of a focused tissue section may be the image with the condenser adjustment of the optical microscope turned on.

Yet another embodiment of this disclosure is a tissue section thickness estimation method. The method comprises an image data generation step that generates microscopic image data for a microscopic image of a focused tissue section, an estimation step that estimates the thickness of the tissue section from the microscopic image and a model generation step that performs machine learning using the microscopic image data of the focused tissue section and the measured thickness of the tissue section as teacher data to generate an estimation model that estimates the thickness of the tissue section when an image of the tissue section is input. The estimation step estimates the thickness of the tissue sections using the estimation model generated by the model generation step.

Yet another embodiment of this disclosure is a tissue section thickness estimation program. The program causes a computer to perform an image data generation step that generates microscopic image data for a microscopic image of a focused tissue section, an estimation step that estimates the thickness of the tissue section from the microscopic image and a model generation step that performs machine learning using the microscopic image data of the focused tissue section and the measured thickness of the tissue section as teacher data to generate an estimation model that estimates the thickness of the tissue section when an image of the tissue section is input. The estimation step estimates the thickness of the tissue sections using the estimation model generated by the model generation step.

Yet another embodiment of this disclosure is a recording media that records a tissue section thickness estimation program. The program causes a computer to perform an image data generation step that generates microscopic image data for a microscopic image of a focused tissue section, an estimation step that estimates the thickness of the tissue section from the microscopic image and a model generation step that performs machine learning using the microscopic image data of the focused tissue section and the measured thickness of the tissue section as teacher data to generate an estimation model that estimates the thickness of the tissue section when an image of the tissue section is input. The estimation step estimates the thickness of the tissue sections using the estimation model generated by the model generation step.

Any combination of the above components, and any conversion of the expressions of the present disclosure between methods, devices, systems, computer programs, data structures, recording media, etc., is also valid as an aspect of the present disclosure.

### ADVANTAGEOUS EFFECTS OF INVENTION

According to the present disclosure, it is possible to estimate the thickness of a prepared tissue section from an image such as an ordinary optical microscopic image.

### BRIEF DESCRIPTION OF THE DRAWINGS

[FIG. 1] Fig. 1 is a side view illustrating tissue sections being cut out (upper row), a top view showing the tissue sections cut out (middle row) and the microscopic images of the tissue sections (lower row).
[FIG. 2] Fig. 2 is a functional block diagram of a tissue section thickness estimation device according to the first embodiment.
[FIG. 3] Fig. 3 is a schematic diagram showing the operation of the tissue section thickness estimation device of Fig. 2.
[FIG. 4] Fig. 4 is a functional block diagram of a tissue section thickness estimation device according to the second embodiment.
[FIG. 5] Fig. 5 is a functional block diagram of a tissue section thickness evaluation device according to the third embodiment.
[FIG. 6] Fig. 6 is a flowchart showing the process of a tissue section thickness estimation method according to the fourth embodiment.
[FIG. 7] Fig. 7 is a graph showing the result of a verification experiment.
[FIG. 8] Fig. 8 is a graph showing the result of a verification experiment.
[FIG. 9] Fig. 9 is a graph showing the result of a verification experiment.
[FIG. 10] Fig. 10 a graph showing the result of a verification experiment.
[FIG. 11] Fig. 11 shows a functional block diagram of a tissue section thickness estimation device according to the seventh embodiment.
[FIG. 12] Fig. 12 is a flowchart showing the process of a tissue section thickness estimation method according to the eighth embodiment.
[FIG. 13] Fig. 13 is the experimental result of estimating the section thickness pixel by pixel from a microscopic image of a single tissue section in focus, using a generative AI model. The left figure is the input image. The right figure is a heat map of the thickness data of a tissue pathology section generated by the generative AI model.

### DESCRIPTION OF EMBODIMENTS

The disclosure is described below with reference to each drawing based on a suitable embodiment. In the embodiments and variations, identical or equivalent components and members shall have the same symbols, and redundant explanations will be omitted as appropriate. The dimensions of the components in each drawing are shown enlarged or reduced as appropriate for ease of understanding. In each drawing, some parts of the components that are not important in explaining the embodiments are omitted. Terms including ordinal numbers such as first and second are used to describe various components, but these terms are used only to distinguish one component from other components, and the components are not limited by these terms.

We first describe the underlying findings before describing embodiments of the disclosure. Generally, machine learning in the medical field is often based on small data, not big data as used in ordinary machine learning, and data of which correctness is not stable. The inventors have studied intensively and found that, with respect to images of the same tissue section taken using an optical microscope, the thickness of a tissue section can be estimated relatively accurately by generating a difference image of an image with a shallow depth of focus, high resolution and low contrast, e.g., an image with the condenser adjustment of the optical microscope turned on, and an image with a deep depth of focus, low resolution and high contrast, e.g., an image with the condenser adjustment of the optical microscope turned off, even if based on small data. The following embodiments are based on this finding.

### The first embodiment

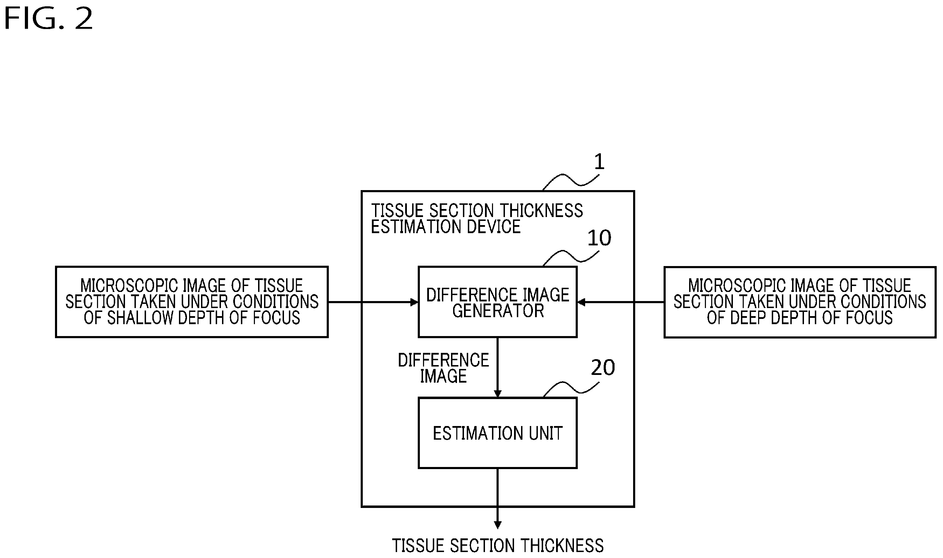

Figure 2 is a functional block diagram of a tissue section thickness estimation device 1 according to the first embodiment of the disclosure. The tissue section thickness estimation device 1 comprises a difference image generator 10 and an estimation unit 20.

A microscopic image of a tissue section taken under conditions of shallow depth of focus and a microscopic image of a tissue section taken under conditions of deep depth of focus are input to the difference image generator 10. The difference image generator 10 generates a difference image of these two optical microscopic images.

The change in depth of focus may be generated, for example, by adjusting the condenser of the optical microscope, more specifically, adjusting the condenser aperture or optical axis.

As will be shown in the validation experiments described below, the tissue sections described above may be HE stained tissue, deparaffinized and unstained tissue, or undeparaffinized and unstained tissue.

The estimation unit 20 estimates the thickness of the tissue section from the difference image generated by the difference image generator 10. The thicker the difference image is, for example, the thicker the tissue section, the greater the change in the image. By using this property of difference images, the thickness of a tissue section can be estimated relatively accurately even if the number of difference images is not so large, i.e., small data. Any suitable method can be used for estimation, for example, statistical methods using multiple regression analysis, decision tree analysis, etc., machine learning, AI, deep learning, etc.

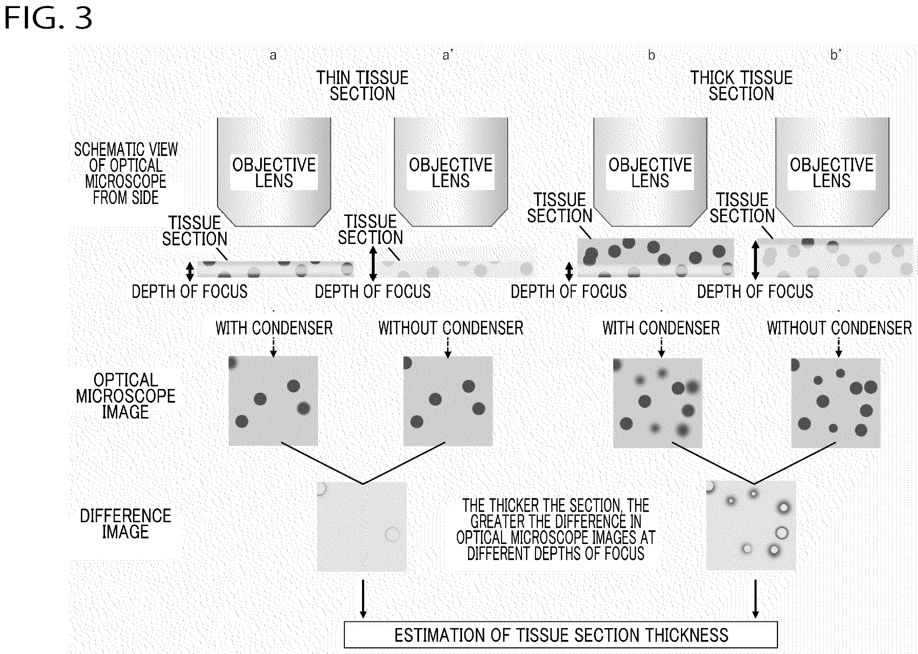

Figure 3 schematically illustrates the operation of tissue section thickness estimation device 1. The images in the left two rows (a, a') are of the same thin section taken with the condenser adjustment of the optical microscope turned on or off, and there is not much difference in the resulting optical microscopic images, and the signal appearing in the difference image is weak. The images in the right two rows (b, b') of the same thin section taken with the condenser adjustment of the optical microscope turned on or off, and there is a considerable difference in the resulting optical microscopic image, and the signal appearing in the difference image is strong. The estimation unit 20 estimates the thickness of the tissue section from this difference image. Normal optical microscopic images are very diverse depending on the site, organ, where the tissue section was taken and the density of staining, and the variety far exceeds the differences due to the thickness of the section. On the other hand, difference images cancel out the effects of the site, organ, where the tissue section was taken and the density of staining, and strongly reflect the thickness of the section.

### The second embodiment

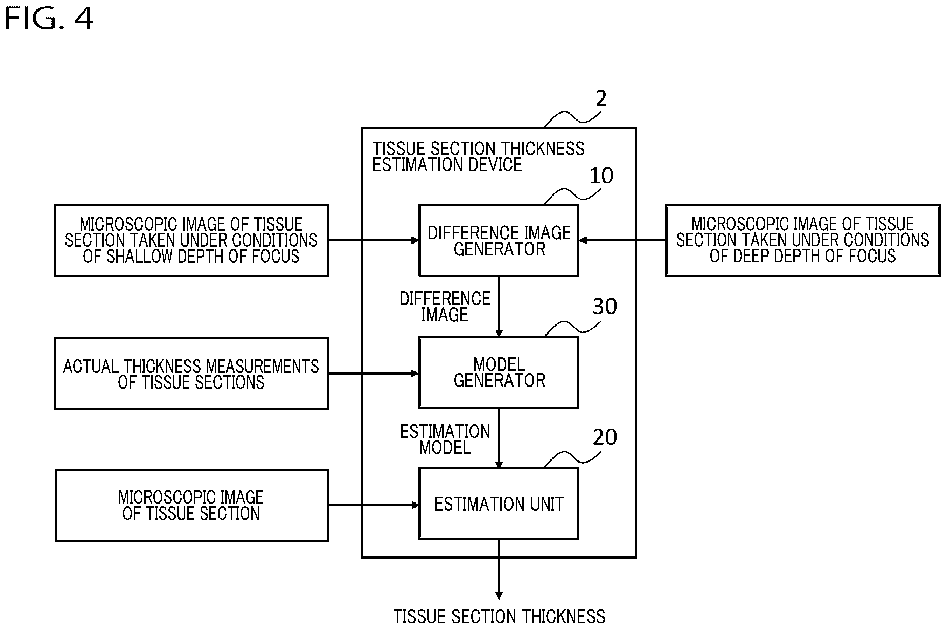

A particularly useful embodiment is one in which the estimation unit 20 estimates the thickness of the tissue sections using an estimation model generated by supervised machine learning, as follows. Figure 4 is a functional block diagram of the tissue section thickness estimation device 2 according to the second embodiment of the disclosure. The thickness estimation device 2 has a difference image generator 10, an estimation unit 20 and a model generator 30. In other words, the tissue section thickness estimation device 2 comprises the model generator 30 in addition to the configuration of the tissue section thickness estimation device 1 in Figure 2. The other configurations of the tissue section thickness estimation device 2 are the same as those of the tissue section thickness estimation device 1. The following description of the tissue section thickness estimation device 2 focuses on the elements that differ from the tissue section thickness estimation device 1.

The difference image generated by the difference image generator 10 and the measured thickness of the tissue section on which the difference image is based are input to the model generator 30. The actual thickness measurements may be measured using a confocal microscope or industrial laser microscope.

The model generator 30 performs machine learning using the microscopic images of the tissue sections taken under shallow depth of focus conditions, the microscopic images of the tissue sections taken under deep depth of focus conditions and the actual thickness measurements of the tissue sections as teacher data. The model generator 30 uses this machine learning to generate an estimation model that estimates and outputs the thickness of the tissue section when an image of the tissue section, which may be a microscopic image taken under shallow depth of focus conditions or a microscopic image taken under deep depth of focus conditions, is input.

Machine learning may be performed using known AI. Specific methods of AI are not limited, but include, for example, convolutional neural networks (CNN), recurrent neural Network (RNN), Long Short Term Memory (LSTM) network, etc. In this case, different neural networks may be mixed for each calculation model with a common input layer.

As shown in the verification experiment described below, there is a sufficient correlation between the microscopic images of tissue sections taken under shallow depth of focus conditions and the microscopic images of tissue sections taken under deep depth of focus conditions, which are included in the teacher data, and the actual measured thickness of the tissue sections. The model generator 30 according to this embodiment can generate an estimation model of the tissue section with high accuracy.

The optical microscopic image of the tissue section is input to the estimation unit 20. The estimation unit 20 estimates the thickness of the tissue section using the estimation model generated by the model generator 30.

According to this embodiment, it is possible to provide a device for estimating the thickness of a tissue section generated from an image such as an ordinary optical microscopic image with high accuracy.

### The third embodiment

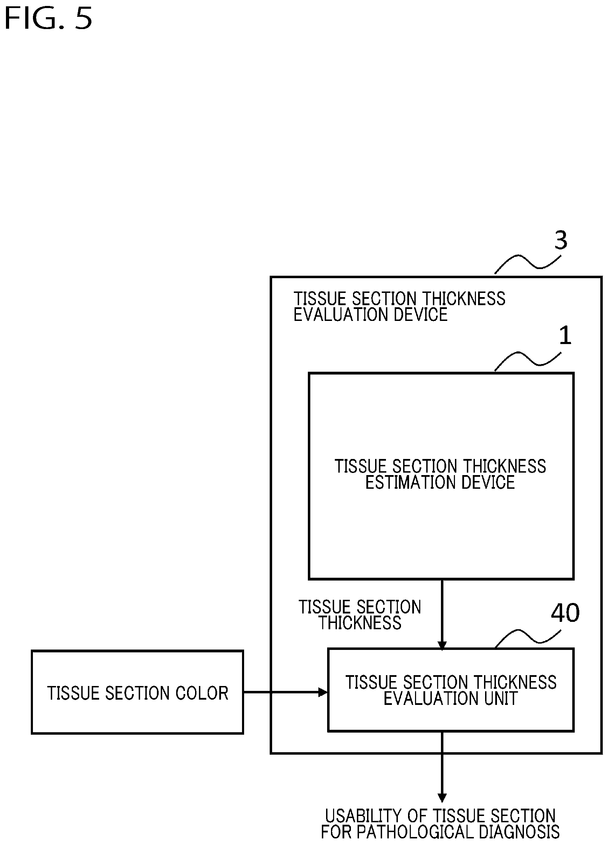

Figure 5 is a functional block diagram of the tissue section thickness evaluation device 3 according to the third embodiment of the disclosure. The tissue section thickness evaluation device 3 comprises the tissue section thickness estimation device 1 of Figure 1 and the tissue section thickness evaluation unit 40.

The thickness of the tissue section estimated by the tissue section thickness estimation device 1 and the color of the tissue section are input to the tissue section thickness evaluation unit 40. The tissue section thickness evaluation unit 40 evaluates the usability of the tissue section for pathological diagnosis based on the thickness of the tissue section and the color of the tissue section.

When considering the usability of a tissue section for pathological diagnosis, for example, a tissue section of a certain color is required to have a very accurate thickness, while a tissue section of another color may have a relatively acceptable thickness error. In response to this situation, tissue section thickness evaluation unit 40 evaluates the thickness and color of the tissue section in an integrated manner. Thereby, the tissue section thickness evaluation device 3 can be used as an application, i.e., medical device, to determine whether the acquired tissue section can be used for pathological diagnosis purposes.

### The fourth embodiment

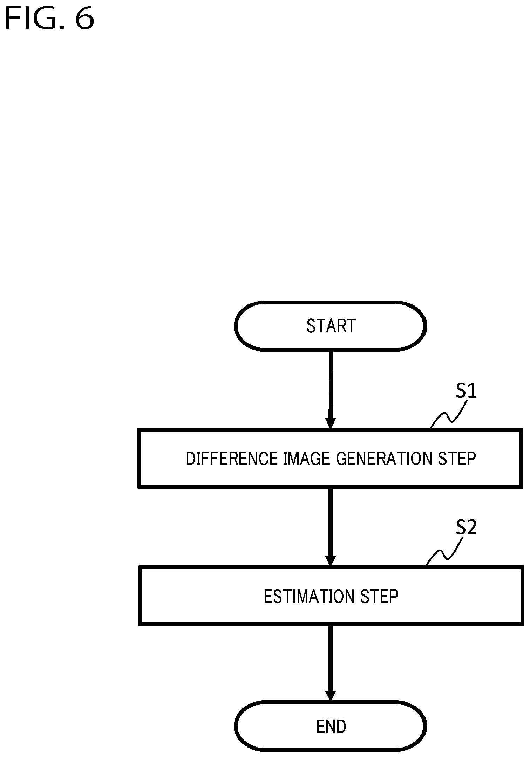

Figure 6 is a flowchart showing the process of a tissue section thickness estimation method according to the fourth embodiment. The method includes a difference image generation step S1 and an estimation step S2.

The difference image generation step S1 generates a difference image between a microscopic image of a tissue section taken under shallow depth of focus conditions and a microscopic image of a tissue section taken under deep depth of focus conditions.

The estimation step S2 estimates the thickness of the tissue section from the difference image generated in the difference image generation step S1.

According to this embodiment, it is possible to estimate the thickness of the created tissue section from the image, such as an ordinary optical microscopic image, using a computer or other means, etc.

### The fifth embodiment

The fifth embodiment is a tissue section thickness estimation program, i.e., computer program. Figure 6 is a flowchart showing the process performed by a computer based on the tissue section thickness estimation program according to the fifth embodiment. The program causes the computer to perform the difference image generation step S1 and the estimation step S2.

The difference image generation step S1 generates a difference image between a microscopic image of a tissue section taken under shallow depth of focus conditions and a microscopic image of a tissue section taken under deep depth of focus conditions.

The estimation step S2 estimates the thickness of the tissue section from the difference image generated in the difference image generation step S1.

According to this embodiment, it is possible to implement a program as software that allows a computer to execute a method for estimating the thickness of a tissue section generated from an image such as an ordinary optical microscopic image.

### The sixth embodiment

The sixth embodiment is a recording medium. This recording medium records a computer program that causes a computer to perform the difference image generation step S1 and the estimation step S2. Fig. 6 is a flowchart showing the process performed by the computer based on the program recorded by the recording medium according to the sixth embodiment.

The difference image generation step S1 generates a difference image between a microscopic image of a tissue section taken under shallow depth of focus conditions and a microscopic image of a tissue section taken under deep depth of focus conditions.

The estimation step S2 estimates the thickness of the tissue section from the difference image generated in the difference image generation step S1.

According to this embodiment, it is possible to record a program for causing a computer to execute a method for estimating the thickness of a tissue section generated from an image such as an ordinary optical microscopic image.

### Verification experiments

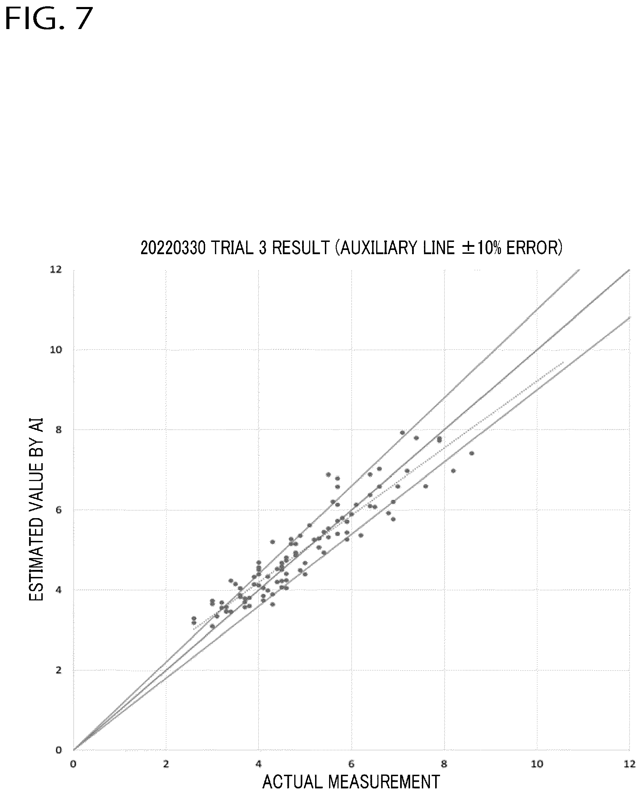

The inventors conducted experiments to verify the effectiveness of the techniques described above. The results of estimating the thickness of a tissue section using the tissue section thickness estimation device 2 shown in Figure 4 are shown in Figures 7 through 10. In Figures 7 through 10, the horizontal axis shows the measured thickness of the tissue sections, and the vertical axis shows the estimated thickness of the tissue sections.

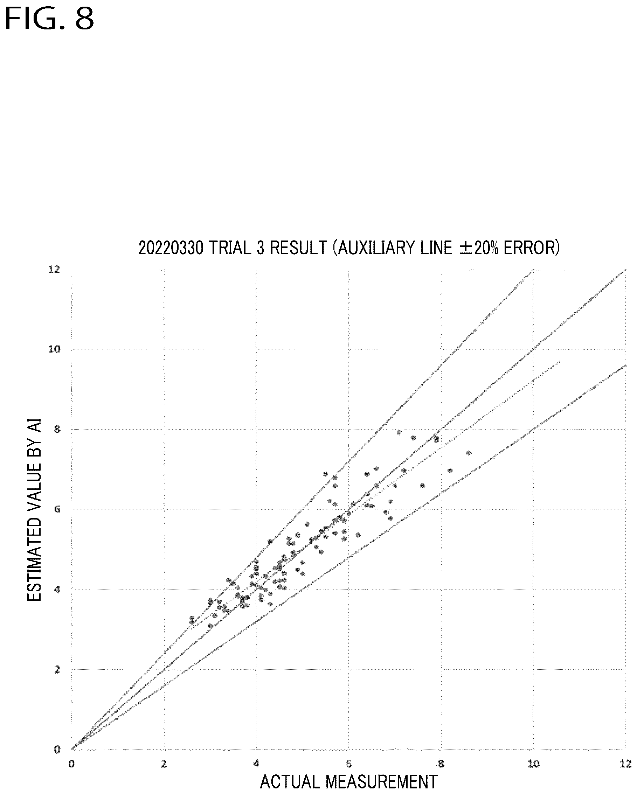

Figures 7 and 8 show the results of experiments using 100 HE stained tissue sections of 100 glass slides with respect to tissue sections of colonic mucosa. In this experiment, neural network regression model learning was used with the generated difference images and the actual thickness of the same area measured with a confocal laser microscope as the teacher data. The optical microscope magnification was set to 400x. Difference images were generated by photographing HE stained tissue sections with and without condenser adjustment using a digital microscope camera. Machine learning was performed using the VGG16-based architecture, with an Adam optimization function, learning rate of 0.0001. The input resolution was set to 224 x 224 pixels, the number of epochs to 100, and the batch size to 16.

When the samples were divided into three parts and cross-validated, each R2 Score, generalization accuracy, was 0.919, 0.813 and 0.845, respectively, with an average of 0.859, mean cv. The RMSLE, log mean squared error, was 0.067, 0.095 and 0.076, respectively, with a mean of 0.079. The MAPE, Mean Absolute Percent Error, was 0.063, 0.101 and 0.077, respectively, averaging 0.081. Figure 7 shows the results of this experiment with an auxiliary line indicating the ±10% error. Figure 8 shows the results of this experiment with an auxiliary line indicating the ±20% error. As can be seen from these figures, it was verified that the performance was within approximately 20% error for all thicknesses of sections as a practical accuracy.

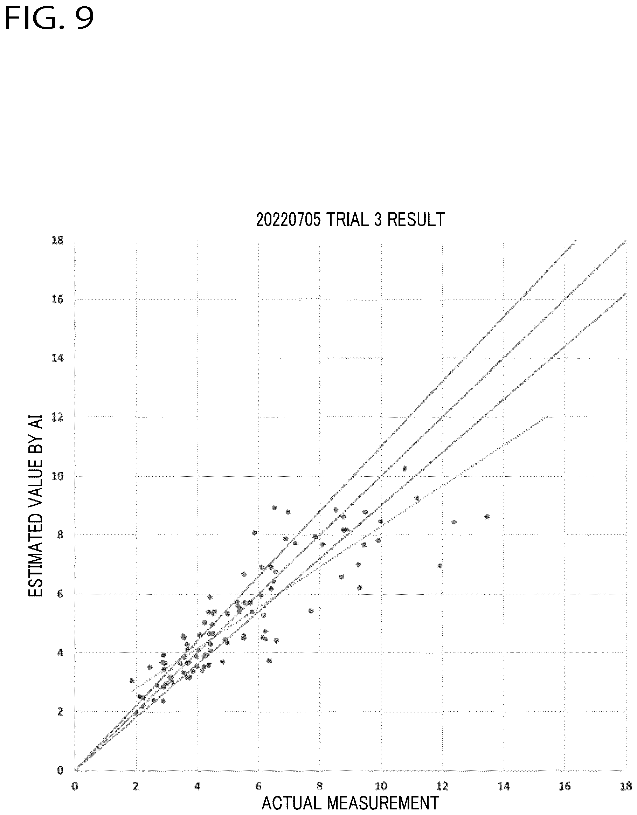

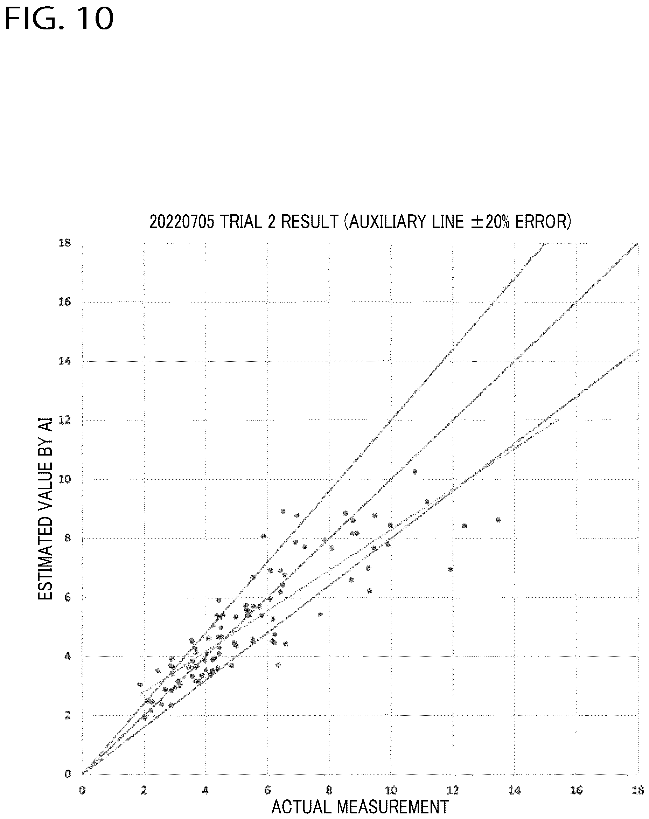

Figures 9 and 10 show the results of the experiment using 102 unstained (undeparaffinized) tissue sections of glass slides with respect to tissue sections of the colonic mucosa. In this experiment, neural network regression model learning was used with the generated difference images and the actual thickness of the same area measured with a confocal laser microscope as the teacher data. The optical microscope magnification was set to 200x. Difference images were generated by photographing unstained, i.e., undeparaffinized, tissue sections with and without condenser adjustment using a digital microscope camera. Machine learning was performed using the VGG16-based architecture, with an Adam optimization function, learning rate of 0.0001. The input resolution was set to 224 x 224 pixels, the number of epochs to 300, and the batch size to 16.

When the samples were divided into three parts and cross-validated, each R2 Score, generalization accuracy, was 0.824, 0.619 and 0.772, respectively, with an average of 0.738, mean cv. The RMSLE, log mean squared error, was 0.141, 0.202 and 0.141, respectively, with a mean of 0.161. The MAPE, Mean Absolute Percent Error, was 0.122, 0.189 and 0.125, respectively, averaging 0.1456. Figure 9 shows the results of this experiment with an auxiliary line indicating the ±10% error. Figure 10 shows the results of this experiment with an auxiliary line indicating the ±20% error. As can be seen from these figures, it was verified that a certain degree of thickness estimation by AI is possible from unstained tissue sections, although the accuracy is lower than that of HE stained images it was verified that a certain degree of thickness estimation by AI was possible from unstained tissue sections.

### The seventh embodiment

In the above embodiment, the thickness of a tissue section was estimated using the difference image between a microscopic image of a tissue section taken under shallow depth of focus conditions and a microscopic image of the tissue section taken under deep depth of focus conditions. However, not limited to this, the thickness of a tissue section can also be estimated using machine learning from a microscopic image of a single tissue section in focus.

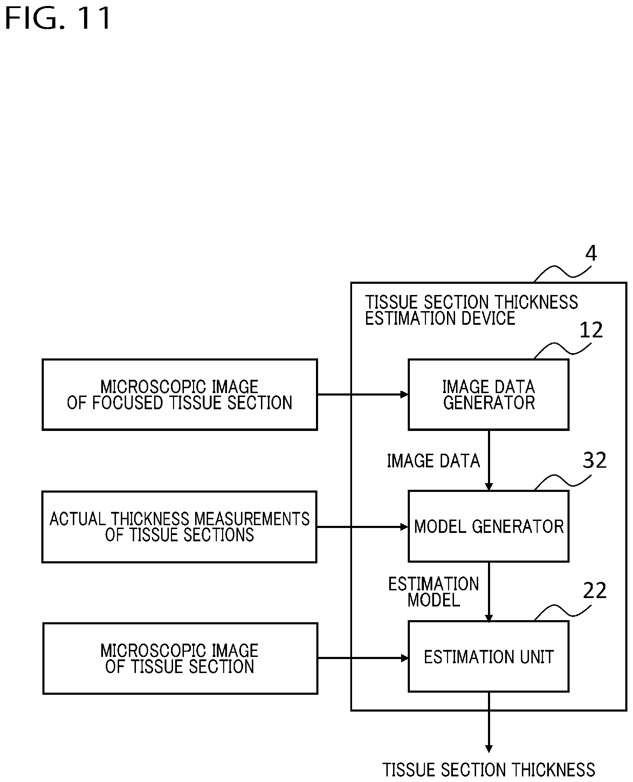

Figure 11 is a functional block diagram of a tissue section thickness estimation device 4 according to the seventh embodiment of the disclosure. The tissue section thickness estimation device 4 comprises an image data generator 12, an estimation unit 22 and a model generator 32.

A microscopic image of a focused tissue section is input to the image data generator 12. The image data generator 12 generates image data for this microscopic image.

The model generator 32 performs machine learning using the microscopic image data of the focused tissue section and the measured thickness of the tissue section as teacher data to generate an estimation model that estimates the thickness of the tissue section when an image of the tissue section is input.

Machine learning may be performed using known AI. Specific methods of AI are not limited, but include, for example, convolutional neural networks (CNN), recurrent neural Network (RNN), Long Short Term Memory (LSTM) network, etc. In this case, different neural networks may be mixed for each calculation model with a common input layer.

The estimation unit 22 estimates the thickness of the tissue sections from the image data generated by the image data generator 12, using the estimation model generated by the model generator 32.

### The eighth embodiment

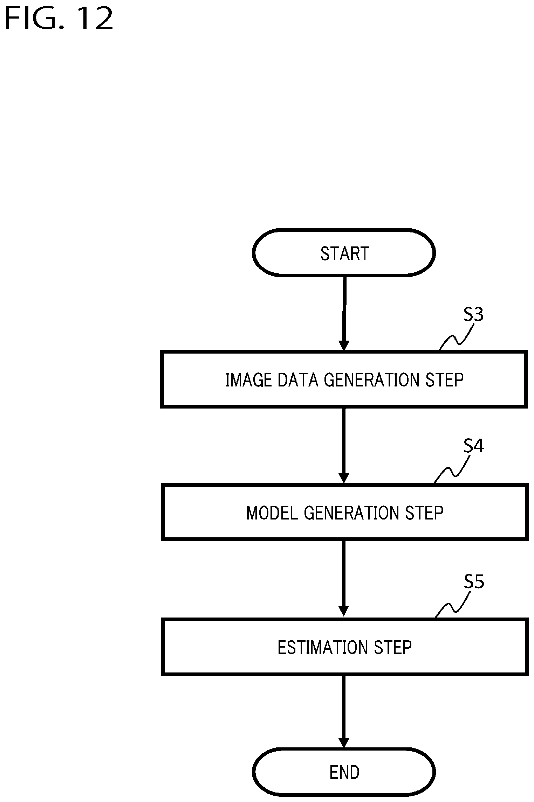

Figure 12 is a flowchart showing the process of a tissue section thickness estimation method according to the eighth embodiment. The method includes an image data generation step S3 and a model generation step S4 and an estimation step S5.

The image data generation step S3 generates a microscopic image data of the focused tissue sections.

The model generation step S4 generates an estimation model that estimates the thickness of the tissue section when an image of the tissue section is input, by machine learning using the microscopic image data of the focused tissue section and the measured thickness of the tissue section as teacher data.

The estimation step S5 estimates the thickness of the tissue section from the microscopic image.

According to this embodiment, it is possible to estimate the thickness of the generated tissue section from an image, such as an ordinary optical microscopic image, using a computer, etc.

### The ninth embodiment

The ninth embodiment is a tissue section thickness estimation program, i.e., computer program. Figure 12 is a flowchart showing the process performed by a computer based on the tissue section thickness estimation program according to the ninth embodiment. The program causes the computer to perform the image data generation step S3, the model generation step S4 and the estimation step S5.

The image data generation step S3 generates a microscopic image data of the focused tissue sections.

The model generation step S4 generates an estimation model that estimates the thickness of the tissue section when an image of the tissue section is input, by machine learning using the microscopic image data of the focused tissue section and the measured thickness of the tissue section as teacher data.

The estimation step S5 estimates the thickness of the tissue section from the microscopic image using the estimation model generated in the model generation step S4.

According to this embodiment, it is possible to implement a program as software that allows a computer to execute a method for estimating the thickness of a tissue section generated from an image such as an ordinary optical microscopic image.

### The tenth embodiment

The tenth embodiment is a recording medium. This recording medium records a computer program that causes a computer to perform the image data generation step S3, the model generation step S4 and the estimation step S5. Fig. 12 is a flowchart showing the process performed by the computer based on the program recorded by the recording medium according to the tenth embodiment.

The image data generation step S3 generates a microscopic image data of the focused tissue sections.

The model generation step S4 generates an estimation model that estimates the thickness of the tissue section when an image of the tissue section is input, by machine learning using the microscopic image data of the focused tissue section and the measured thickness of the tissue section as teacher data.

The estimation step S5 estimates the thickness of the tissue section from the microscopic image.

According to this embodiment, it is possible to record a program for causing a computer to execute a method for estimating the thickness of a tissue section generated from an image such as an ordinary optical microscopic image.

### Performance evaluation

The inventors evaluated the estimation results obtained by the method for estimating the thickness of a tissue section using machine learning from a microscopic image of a single tissue section in focus, as described above. Three types of evaluation indices were used: R2 score (coefficient of determination score), RMSLE (Root Mean Squared Logarithmic Error) and MAPE (Mean Absolute Percentage Error). The microscopic image of the focused tissue section used for machine learning was a single HE image with the condenser adjustment of the microscope turned on.

### Results are as follows.

R2 score: 0.929
RMSLE: 0.093
MAPE: 0.093

The evaluation results show that machine learning with this method can estimate the thickness of tissue sections with high accuracy.

In the above seventh embodiment, CNN, RNN, LSTM, etc. were exemplified as specific machine learning methods for generating an estimation model to estimate the thickness of a tissue section when an image of the tissue section is input. However, machine learning methods are not limited to these, for example, generative AI models can also be used.

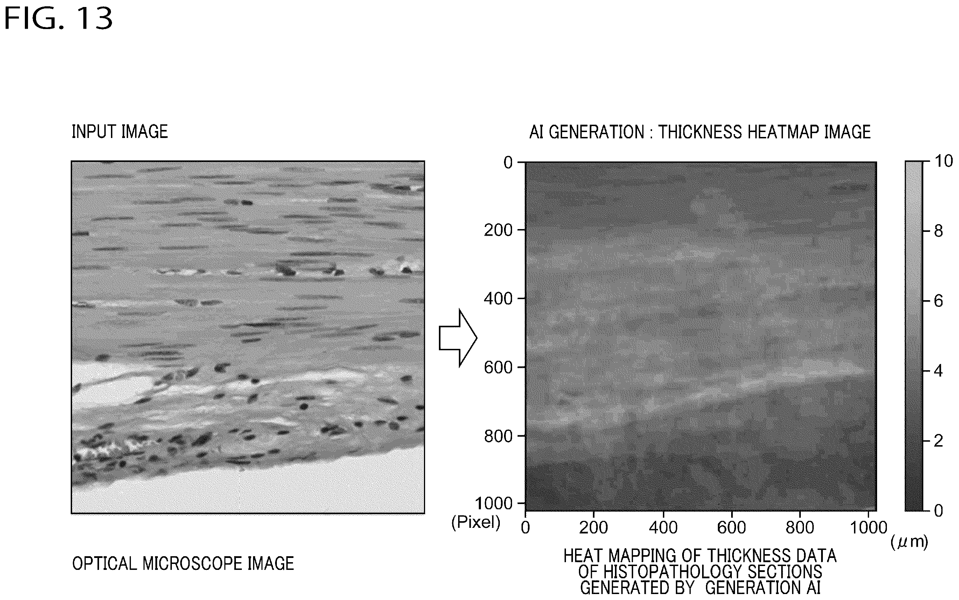

Figure 13 shows the experimental results of estimating the thickness of a section pixel by pixel from a microscopic image of a single tissue section in focus, using a generative AI model. The left figure shows the input image, i.e., the optical microscopic image. The right figure is a heat map of the thickness data of the histological sections generated by the generative AI model, with the thickness estimates represented by shading. The generative AI model used the Autoencoder as base architecture. In this experiment, training was performed using 49 microscopic images and the corresponding confocal laser microscope measured thickness of the tissue sections. The experimental results show that the model is able to not only obtain a single representative value of section thickness within the range of the desired image, but also to finely discriminate areas of appropriate and inappropriate thickness for diagnosis across the entire image.

The disclosure has been described above based on several embodiments. It is understood by those skilled in the art that these embodiments are examples, that various variations and modifications are possible within the claims of this disclosure, and that such variations and modifications are also within the claims of this disclosure. Accordingly, the description and drawings herein should be treated as illustrative rather than limiting.

Any combination of the above-described embodiments and variations is also useful as an embodiment of the present disclosure. The new embodiments resulting from the combination will have the combined effects of each of the embodiments and variations combined.

In understanding the technical ideas abstracted from the embodiments and variations, the technical ideas should not be interpreted as limited to the contents of the embodiments and variations. The aforementioned embodiments and variations are merely concrete examples, and many design changes, such as changes, additions, and deletions of components, are possible. In the embodiments, the contents where such design changes are possible are emphasized with the notation "embodiments". However, it goes without saying that design changes are also permitted for contents without such notation.

### INDUSTRIAL APPLICABILITY

The present disclosure relates to a tissue section thickness estimation device, a tissue section thickness evaluation device, a tissue section thickness estimation method, a tissue section thickness estimation program, and a recording medium.

### REFERENCE SIGNS LIST

1. Tissue section thickness estimation device,
2. Tissue section thickness estimation device,
3. Tissue section thickness evaluation device,
4. Tissue section thickness estimation device,
10. Difference image generator,
12. Image data generator,
20. Estimation unit,
22. Estimation unit,
30. Model generator,
32. Model generator,
40. Tissue section thickness evaluation unit,
S1. Difference image generation step,
S2. Estimation step,
S3. Image data generation step,
S4. Model generation step,
S5. Estimation step.

## Claims

1. A tissue section thickness estimation device, comprising:
a difference image generator that generates a difference image between a microscopic image of a tissue section taken under conditions of shallow depth of focus and a microscopic image of the tissue section taken under conditions of deep depth of focus; and
an estimation unit that estimates the thickness of the tissue section from the difference image.

2. The tissue section thickness estimation device according to claim 1, wherein the change in depth of focus is generated by adjusting the condenser of an optical microscope.

3. The tissue section thickness estimation device according to claim 1 or 2, comprising a model generator that performs machine learning using the microscopic images of the tissue sections taken under shallow depth of focus conditions, the microscopic images of the tissue sections taken under deep depth of focus conditions and the actual thickness measurements of the tissue sections as teacher data, and uses the machine learning to generate an estimation model that estimates and outputs the thickness of the tissue section when an image of the tissue section is input,
wherein the estimation unit estimates the thickness of the tissue section using the estimation model generated by the model generator.

4. The tissue section thickness estimation device according to claim 1 or 2, wherein the tissue sections are HE stained tissue, deparaffinized and unstained tissue, undeparaffinized and unstained tissue.

5. A tissue section thickness evaluation device, comprising:
the tissue section thickness estimation device according to claim 1 or 2; and
a tissue section thickness evaluation unit,
wherein the tissue section thickness evaluation unit evaluates the usability of the tissue section for pathological diagnosis based on the thickness of the tissue section estimated by the tissue section thickness estimation device and the color of the tissue section.

6. A tissue section thickness estimation method, comprising:
a difference image generation step that generates a difference image between a microscopic image of a tissue section taken under shallow depth of focus conditions and a microscopic image of a tissue section taken under deep depth of focus conditions; and
an estimation step that estimates the thickness of the tissue section from the difference image.

7. A tissue section thickness estimation program that causes a computer to perform:
a difference image generation step that generates a difference image between a microscopic image of a tissue section taken under shallow depth of focus conditions and a microscopic image of a tissue section taken under deep depth of focus conditions; and
an estimation step that estimates the thickness of the tissue section from the difference image.

8. A recording media that records a tissue section thickness estimation program that causes a computer to perform:
a difference image generation step that generates a difference image between a microscopic image of a tissue section taken under shallow depth of focus conditions and a microscopic image of a tissue section taken under deep depth of focus conditions; and
an estimation step that estimates the thickness of the tissue section from the difference image.

9. A tissue section thickness estimation device, comprising:
an image data generator that generates microscopic image data for a microscopic image of a focused tissue section;
an estimation unit that estimates the thickness of the tissue section from the microscopic image; and
a model generator that performs machine learning using the microscopic image data of the focused tissue section and the measured thickness of the tissue section as teacher data to generate an estimation model that estimates the thickness of the tissue section when an image of the tissue section is input,
wherein the estimation unit estimates the thickness of the tissue sections using the estimation model generated by the model generator.

10. The tissue section thickness estimation device according to claim 9, wherein the microscopic image of a focused tissue section is the image with the condenser adjustment of the optical microscope turned on.

11. A tissue section thickness estimation method, comprising:
an image data generation step that generates microscopic image data for a microscopic image of a focused tissue section;
an estimation step that estimates the thickness of the tissue section from the microscopic image; and
a model generation step that performs machine learning using the microscopic image data of the focused tissue section and the measured thickness of the tissue section as teacher data to generate an estimation model that estimates the thickness of the tissue section when an image of the tissue section is input,
wherein the estimation step estimates the thickness of the tissue sections using the estimation model generated by the model generation step.

12. A tissue section thickness estimation program that causes a computer to perform:
an image data generation step that generates microscopic image data for a microscopic image of a focused tissue section;
an estimation step that estimates the thickness of the tissue section from the microscopic image; and
a model generation step that performs machine learning using the microscopic image data of the focused tissue section and the measured thickness of the tissue section as teacher data to generate an estimation model that estimates the thickness of the tissue section when an image of the tissue section is input,
wherein the estimation step estimates the thickness of the tissue sections using the estimation model generated by the model generation step.

13. A recording media that records a tissue section thickness estimation program that causes a computer to perform:
an image data generation step that generates microscopic image data for a microscopic image of a focused tissue section;
an estimation step that estimates the thickness of the tissue section from the microscopic image; and
a model generation step that performs machine learning using the microscopic image data of the focused tissue section and the measured thickness of the tissue section as teacher data to generate an estimation model that estimates the thickness of the tissue section when an image of the tissue section is input,
wherein the estimation step estimates the thickness of the tissue sections using the estimation model generated by the model generation step.
